# EUROPEAN PATENT SPECIFICATION

(11) **EP 3 807 615 B1**
(45) Date of publication and mention of the grant of the patent: **07.02.2024**
(21) Application number: 19849289.4
(22) Date of filing: 19.06.2019
(51) Int. Cl.: G01N 1/22

(54) **INORGANIC PASSIVE SAMPLER**
ANORGANISCHER PASSIVER PROBENEHMER
ÉCHANTILLONNEUR PASSIF INORGANIQUE

(30) Priority: 20.06.2018 TR 201808758
(43) Date of publication of application: 21.04.2021
(73) Proprietor: Türkiye Bilimsel ve Teknolojik Arastirma Kuruma (Tübitak), Ankara (TR); Anadolu Üniversitesi, Tepebasi/Eskisehir (TR)
(72) Inventor: ERCAN, Ozgen, Yerleskesi, Kocaeli (TR); CEYLAN, Ozcan, Yerleskesi, Gebze/Kocaeli (TR); GUNDUZ, Halit, Yerleskesi, Gebze/Kocaeli (TR); AKSOY, F. P nar, Yerleskesi, Gebze/Kocaeli (TR); OZDEN, Özlem, 26555 Eskisehir (TR); GAGA, Eftade Emine, 26555 Eskisehir (TR); DOGEROGLU, Tuncay, 26555 Eskisehir (TR)
(74) Representative: Handanoglu, Erdal
(86) International application number: PCT/TR2019/050470
(87) International publication number: WO 2020/036563

(56) References cited:
- EP-A1- 2 551 339
- US-A1- 2009 301 229
- US-A1- 2011 142 733
- EFTADE O GAGA ET AL: "Evaluation of air quality by passive and active sampling in an urban city in Turkey: current status and spatial analysis of air pollution exposure", ENVIRONMENTAL SCIENCE AND POLLUTION RESEARCH - INTERNATIONAL, SPRINGER BERLIN / HEIDELBERG, LA, vol. 19, no. 8, 26 April 2012 (2012-04-26) , pages 3579-3596, XP035096548, ISSN: 1614-7499, DOI: 10.1007/S11356-012-0924-Y
- PLAISANCE, HERVE et al.: "Performances and Application of a Passive Sampling Method for the Simultaneous Determination of Nitrogen Dioxide and Sulfur Dioxide in Ambient Air", Environmental monitoring and assessment, vol. 79 , pages 301-15,
- J. ZHOU et al.: "Measurement of Ozone Concentrations in Ambient Air Using a Badge-Type Passive Monitor", Journal of the Air & Waste Management Association, vol. 47, no. 6, 1997, pages 697-703, XP055700584, DOI: 10.1080/10473289.1997.10463932
- SALEM, ALAA et al.: "Determination of nitrogen dioxide, sulfur dioxide, ozone, and ammonia in ambient air using the passive sampling method associated with ion chromatographic and potentiometric analyses", Air quality, atmosphere, & health, vol. 2 , pages 133-145, XP055700590, DOI: 10.1007/s11869-009-0040-4

## Description

### Field of the Invention

The present invention relates to an inorganic (NO₂, SO₂ and O₃) passive sampler that can be used in air pollution sampling studies such as indoor, outdoor and personal exposure measurements.

### Background of the Invention

Passive samplers are pieces of equipment which are capable of collecting gas samples from the atmosphere at a rate controlled by molecular diffusion without the need for any active air movement. The passive sampling method to which the invention relates is expressed by the Fick's 1st. Law based on molecular diffusion. Within the scope of the national air pollution sampling studies, passive samplers are used for different purposes such as indoor, outdoor, and personal exposure samplings for NO₂, SO₂ and O₃ pollutants.

Passive samplers provide more convenience and advantage in air quality measurement studies compared to active and automatic sampling methods thanks to the facts that they are simple, easy to carry and inexpensive and that they enable sampling at multiple points simultaneously without requiring electrical power. Therefore, in recent years, the use of passive samplers has become widespread in domestic and international air pollution sampling studies (indoor, outdoor and personal exposure measurements).

Nitrogen dioxide (NO₂), sulfur dioxide (SO₂) and ozone (O₃) are among the most common inorganic air pollutant components in the atmosphere. There are different sources that can cause high levels of these components in indoor environments as well outdoor environments. Personal exposure to high concentrations of these components results in significant health effects. Therefore, determination of the levels of these components becomes even more important.

Passive samplers are available in two forms, namely radial and axial, depending on the direction of the diffusion process. In radial passive samplers, diffusion direction is parallel to the sampler's diameter. The sorbent cartridge is located in a cylindrical, porous and polymeric diffusive membrane body. In axial passive samplers, the diffusion path is perpendicular to the sampler section. Axial passive samplers are classified in two ways, namely badge and tube, based on the sampler geometry. When the diffusion path length / sampler cross-sectional area (L/A) ratio is greater than 1, it is referred to as the tube type sampler, and when the ratio is smaller than 1 it is referred to as the badge type sampler. The sampling surface areas of the radial passive samplers are larger than those of the axial samplers and the length of the diffusion path is shorter. Therefore, they are suitable for shorter sampling periods since the sampling rates are higher than those of the axial samplers.

In passive samplers; absorbent materials coated with chemicals specific to the components are used as the retaining means. Depending on the retaining means used, generally ion chromatographic and spectrophotometric analyzes are performed. Optimum sampling times that the passive samplers can be used effectively vary according to the geometries of the passive samplers and thus their sampling rates. Passive samplers with high sampling rates are used for shorter duration (e.g. 8 hours, 1 day) studies, while passive samplers with low sampling rates are used for longer duration studies (e.g. 1 week, 1 month).

The invention disclosed in the state of the art international patent document numbered WO2016141443A1 is a kit comprising passive samplers which sample gas concentrations such as sulphur dioxide, nitrogen dioxide and ozone in the air simultaneously. A separate passive sampler is used for each pollutant. Each passive sampler in the kit is cylindrical and all of them are placed into a rectangular box.

The Chinese patent document numbered CN102221592 in the state of the art discloses a method for detecting the ozone concentration in the air by using a passive sampler. It does not include NO₂ and SO₂. This method is preferred because it is simple, easy, has high sensitivity, low detection limit, and extremely high practical application values.

The United States patent document numbered US20080259341 in the state of the art discloses a system and detection method for measuring a gas concentration in the air including a light source, a passive sampler and a detector.

The United States patent document numbered US2009301229 discloses a novel multi-gas passive sampler, whereby different collection media are packed into one passive sampler to collect a variety of air pollutants (or groups of air pollutants) at the same time. By comparison with known commercially available passive samplers-in which only a single collection medium is used to collect a single air pollutant of or group of air pollutants-the MGPS is more cost effective, convenient to use and more environment-friendly.

The costs of the commercial passive samplers used in the art and obtained from abroad are rather high and most of them do not provide post-sampling analysis service. In addition, many passive samplers are disposable and are not reusable after cleaning and pre-treatment. This requires buying new passive samplers for each sampling study. In our country, high costs are imposed when commercially purchased samplers are used in passive sampling studies conducted for the inorganic components discussed in the scope of the present invention, and this limits the possibility of sampling at multiple points. Furthermore, a separate passive sampler is required to be used for each component in most of the commercial passive samplers.

In addition, in the passive samplers used in the art, NO₂ and SO₂ pollutants are generally collected in separate samplers instead of a single sampler. In this case, there is a need to prepare three separate passive samplers if three components are sampled simultaneously. With the present sampler that is developed, unlike the other passive samplers, the concentrations of 3 components are determined simultaneously and it is possible to re-use the sampler after cleaning. In most sampling studies, blank samplers are prepared for each component for reliability of the results. This increases the number of samplers to be prepared even more. Moreover, this is not practical.

### Summary of the Invention

The objective of the present invention is to provide a passive sampler which allows simultaneous sampling at multiple points.

Another objective of the present invention is to provide a passive sampler which is not disposable, is reusable after cleaning and pretreatment, and enables to determine the concentrations of three components simultaneously.

### Detailed Description of the Invention

An **"inorganic passive sampler"** developed to fulfill the objectives of the present invention is illustrated in the accompanying figures, in which:

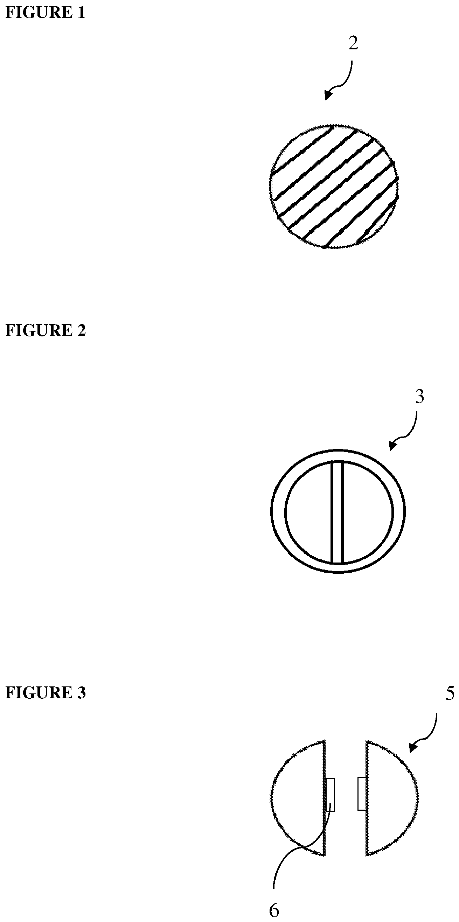

**Figure 1** is a view of the closed cover on top of the inorganic passive sampler.
**Figure 2** is a view of the barrier cover on top of the inorganic passive sampler.
**Figure 3** is a view of the fixing apparatus and grip used for fixing the retaining means to the inorganic passive sampler.

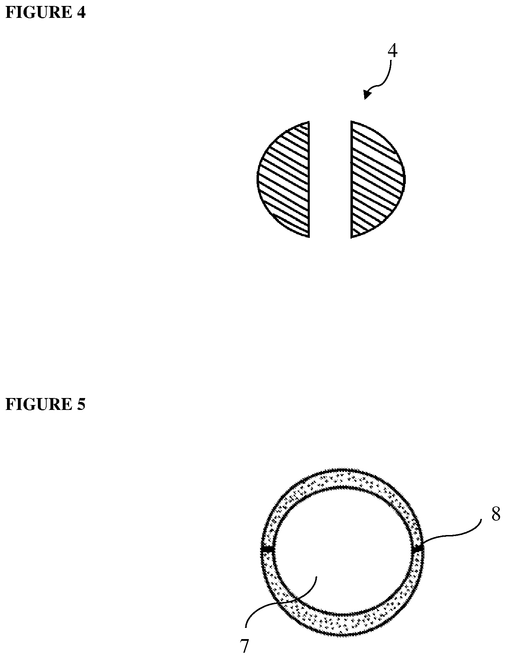

**Figure 4** is a view of the metal filters used as the retaining means during sampling.
**Figure 5** is a view of the lugs that facilitate arrangement of two semicircular inorganic passive samplers on the substrate.

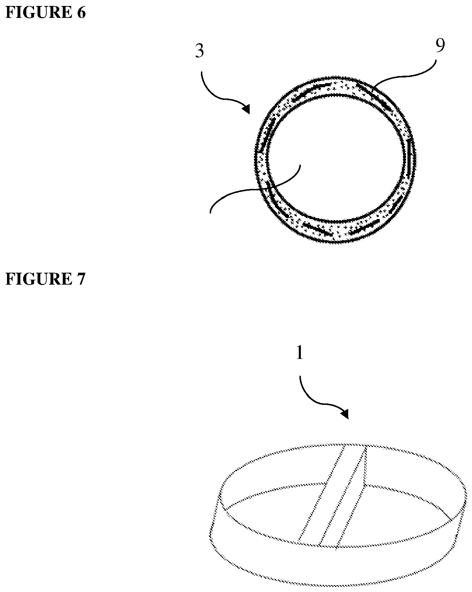

**Figure 6** is a view of the ribs that will enable the barrier cover to fit onto the inorganic passive sampler.
**Figure 7** is a view of the inorganic passive sampler.

The components in the figures are given reference numbers as follows:
**1.** Inorganic passive sampler
**2.** Closed cover
**3.** Barrier cover
**4.** Metal filter
**5.** Fixing apparatus
**6.** Grip
**7.** Substrate
**8.** Lugs
**9.** Ribs

The inorganic passive sampler (1) of the present invention is defined in the appended claims.

In the present invention, the three separate air pollutants NO₂, SO₂ and O₃ will be retained by different retaining means placed in a single sampler. These retaining means are produced in a semicircular form. When forming the inorganic passive sampler, NO₂ and SO₂ will be retained in a single retaining means and O₃ in a separate (second semicircle) retaining means. Thus, it will be possible to sample all three components simultaneously with a single sampler.

In the passive sampler, a stainless steel metal filter (4) coated with 20% TEA (triethanolamine) solution is used for nitrogen dioxide (NO₂) and sulphur dioxide (SO₂), and a stainless steel metal filter (4) coated with an aqueous solution comprising 1% NaNO₂, 2% Na₂CO₃ and 2% glycerol is used for ozone (O₃) as the retaining means. In order to increase the retaining efficiency, two metal filters (4), which are cut-out in semicircular form placed on top of each other, are covered with coating solution. Metal filters (4) used as the retaining means have a 50-100 mesh size.

In an example not falling under the scope of the appended claims, instead of metal filters (4); 0.5 cm thick polyurethane foam (PUF) and GF/A glass fiber filter paper are also used as alternative retaining means in passive samplers.

The metal filters (4) are placed in the semicircular samplers and fixed to the sampler base by means of a fixing apparatus (5). The fixing apparatus (5) is used to ensure that the metal filters (4), which are the retaining means, to remain fixed on the sample base and not to fall off when the sampler is inverted to be suspended at the sampling point; and it is configured so as to completely fit to the inner base of each semicircle.

On the flat side of the fixing apparatus (5) there is provided a grip (6) for convenient placement and removal thereof to/from the sampler base. Then, to form a single-piece sampler form, the semicircular samplers are connected to each other upon being placed side by side on a substrate (7) produced from the sampler material. The objective here is to provide a more compact sampler to be treated as a single sampler instead of preparing individual samplers for NO₂-SO₂ and O₃, attaching separate covers and carrying and suspending them separately at the sampling point. There are lugs (8) provided on the substrate (7) on two opposing sides which ensure proper placement of the two semicircular samplers.

A barrier cover (3) comprising a metal filter (4) is placed on the semicircular samplers that are assembled on the substrate (7) for use during sampling. The metal filters (4) used in the barrier cover (4) have a 50-100 mesh size. A fixing apparatus (5) is used for keeping the metal filter (4) fixed in the barrier cover (3). There are ribs (9) provided on the inside of the barrier cover (3) and on the outer surface of the semicircular samplers to ensure that the cover (3) fits completely. Additionally, a closed cover (2) is mounted on the barrier cover (3) while carrying the samplers. Thus, instead of changing the cover at the sampling point, the closed cover (2) can be removed from the barrier cover (3) thereby enabling to start the sampling operation immediately. This is regarded as an advantage of the sampler in terms of time saving and ergonomics.

After the sampling process is finished, the closed cover (2) is mounted back on the barrier cover (3) and the samplers are taken to the laboratory for analysis.

Passive samplers can be used in different sampling studies such as indoor sampling, outdoor sampling and personal sampling. Therefore, as an alternative, samplers with long diffusion path can be designed for use in indoor outdoor sampling studies, and samplers with short diffusion path can be designed for use in personal sampling and workplace sampling studies. The height of the sampler with short diffusion path is 0.9 cm and the height of the sampler with long diffusion path is 2 cm. The sectional area of each semicircular sampler is 4.75 cm². The material of the sampler is polypropylene and its color is white. All sampler pieces are of the same material.

## Claims

1. An inorganic passive sampler (1) used for different purposes such as indoor sampling, outdoor sampling and personal sampling for inorganic air pollutants such as NO₂, SO₂ and O₃, and comprising
- a first semicircular piece comprising a first inner base;
- a second semicircular piece comprising a second inner base;
wherein the first and the second semicircular piece are placed next to each other on a substrate (7) and are connected to each other so as to form a single sampler;
- NO₂-SO₂ retaining means which is in the first semicircular pieces and O₃ retaining means which is in the second semicircular piece,
wherein the NO₂SO₂ retaining means are formed by a stainless steel metal filter (4) coated with 20% triethanolamine (TEA) solution,
and wherein the O₃ retaining means are formed by a stainless steel metal filter (4) coated with an aqueous solution comprising 1% NaNO₂, 2% Na₂CO₃ and 2% glycerol;
- a first fixing apparatus for fixing the NO₂-SO₂ retaining means to the first inner base and enabling the NO₂-SO₂ retaining means to completely fit into the first inner base wherein the first fixing apparatus is configured so as to completely fit to the first inner base; and
- a second fixing apparatus for fixing the O₃ retaining means to the second inner base and enabling the O₃ retaining means to completely fit into the second inner base, wherein the second fixing apparatus is configured so as to completely fit to the second inner base.

2. Inorganic passive sampler (1) according to Claim 1, wherein the metal filters (4) with 50-100 mesh size are used as the retaining means.

3. Inorganic passive sampler (1) according to Claim 1, wherein the semicircular samplers prepared for NO₂-SO₂ and O₃ are assembled to each other upon being placed side by side on the substrate (7) produced from the same material.

4. Inorganic passive sampler (1) according to Claim 1, wherein a barrier cover (3) comprising a metal filter (4) is placed thereon for covering it during sampling.

5. Inorganic passive sampler (1) according to Claim 4, wherein a metal with 50-100 mesh size is used in the barrier cover (3).

6. Inorganic passive sampler (1) according to Claim 5, wherein ribs (9) provided on the inside of the barrier cover (3) and on the outer surface of the semicircles to ensure that the cover fits completely.

7. Inorganic passive sampler (1) according to Claim 5, wherein an additional closed cover (2) mounted on the barrier cover (3) while carrying the sampler.

8. Inorganic passive sampler (1) according to Claim 1, wherein the semicircles each having a sectional area of 4.75 cm².

9. Inorganic passive sampler (1) according to Claim 1, wherein it is produced from polypropylene and its color is white.

## Patentansprüche

1. Ein anorganischer Passivsammler (1), der für verschiedene Zwecke verwendet wird, z. B. für die Probenahme in Innenräumen, im Freien und für die persönliche Probenahme von anorganischen Luftschadstoffen wie NO₂, SO₂ und O₃, sowie für die Zusammensetzung
- ein erstes halbkreisförmiges Stück, das eine feste innere Basis bildet;
- ein zweites halbkreisförmiges Stück, das eine zweite innere Basis bildet;
wobei das erste und das zweite halbkreisförmige Stück nebeneinander auf einem Substrat (7) platziert und miteinander verbunden werden, um einen einzigen Probennehmer zu bilden;
- NO₂-SO₂-Rückhaltemittel, die sich in den ersten halbkreisförmigen Teilen befinden, und O₃-Rückhaltemittel, die sich im zweiten halbkreisförmigen Stück befinden,
wobei die NO₂SO₂-Rückhaltemittel durch einen Edelstahl-Metallfilter (4) gebildet werden, der mit 20% Triethanolamin (TEA)-Lösung beschichtet ist,
und wobei die O₃-Rückhaltemittel durch einen Metallfilter (4) aus rostfreiem Stahl gebildet werden, der mit einer wässrigen Lösung beschichtet ist, die 1% NaNO₂, 2% Na₂CO₃, 2% Na₂CO₃ und 2% Glycerin umfasst;
- eine erste Befestigungsvorrichtung zum Befestigen der NO₂-SO₂-Rückhaltemittel an der ersten Innenbasis und zum Ermöglichen, dass die NO₂-SO₂-Rückhaltemittel vollständig in die erste Innenbasis passen, wobei die erste Befestigungsvorrichtung so konfiguriert ist, dass sie vollständig in die erste Innenbasis passt, und
- eine zweite Befestigungsvorrichtung zum Befestigen des O₃-Haltemittels an der zweiten Innenbasis und zum Ermöglichen, dass das O₃-Haltemittel vollständig in die zweite Innenbasis passt, wobei die zweite Befestigungsvorrichtung so konfiguriert ist, dass sie vollständig an die zweite Innenbasis passt.

2. Anorganischer Passivsammler (1) nach Anspruch 1, wobei als Rückhaltemittel Metallfilter (4) mit einer Maschenweite von 50-100 Mesh verwendet werden.

3. Anorganischer Passivsammler (1) nach Anspruch 1, wobei die für NO₂-SO₂ und O₃ vorbereiteten halbkreisförmigen Sammler durch nebeneinanderliegendes Platzieren auf dem aus dem gleichen Material hergestellten Substrat (7) zusammengefügt werden.

4. Anorganischer Passivsammler (1) nach Anspruch 1, wobei darauf eine Barriere-Abdeckung (3) mit einem Metallfilter (4) angebracht ist, um ihn während der Probenahme abzudecken.

5. Anorganischer Passivsammler (1) nach Anspruch 4, wobei in der Barriere-Abdeckung (3) ein Metall mit einer Maschenweite von 50-100 verwendet wird.

6. Anorganischer Passivsammler (1) nach Anspruch 5, wobei Rippen (9) auf der Innenseite der Barriere-Abdeckung (3) und auf der Außenfläche der Halbkreise vorgesehen sind, um sicherzustellen, dass die Abdeckung vollständig passt.

7. Anorganischer Passivsammler (1) nach Anspruch 5, wobei eine zusätzliche geschlossene Abdeckung (2) auf der Barriere-Abdeckung (3) angebracht ist, während der Probesammler getragen wird.

8. Anorganischer Passivsammler (1) nach Anspruch 1, wobei die Halbkreise jeweils eine Querschnittsfläche von 4,75 cm² aufweisen.

9. Anorganischer Passivsammler (1) nach Anspruch 1, wobei er aus Polypropylen hergestellt ist und seine Farbe Weiß ist.

## Revendications

1. Un dispositif passif inorganique d'échantillonnage (1) utilisé à diverses fins telles que l'échantillonnage en intérieur, en extérieur et personnel pour les polluants atmosphériques inorganiques tels que le NO₂, le SO₂ et O₃, et comprenant
- Un premier morceau semi-circulaire comprenant une première base intérieure ;
- Un deuxième morceau semi-circulaire comprenant une deuxième base intérieure ;
Où les première et deuxième pièces semi-circulaires sont placées côte à côte sur un substrat (7) et sont connectées l'une à l'autre de manière à former un seul échantillonneur;
- Dans les première et deuxième pièces semi-circulaires, un moyen de rétention pour le NO₂-SO₂ qui se trouve dans la première pièce semi-circulaire et un moyen de rétention pour O₃ qui se trouve dans la deuxième pièce semi-circulaire,
où les moyens de rétention pour NO₂-SO₂ sont formés par un filtre métallique en acier inoxydable (4) enduit d'une solution de 20 % de triéthanolamine (TEA),
où les moyens de rétention pour NO₂-SO₂ sont formés par un filtre métallique en acier inoxydable revêtu d'une solution de 20 % de triéthanolamine (TEA), et les moyens de rétention pour O₃ sont constitués d'un filtre métallique en acier inoxydable revêtu d'une solution aqueuse comprenant 1 % de NaNO₂, 2 % de Na₂CO₃ et 2 % de glycérol ;
- un premier dispositif de fixation pour fixer les moyens de rétention pour NO₂-SO₂ à la première base intérieure et permettant aux moyens de rétention pour NO₂-SO₂ de s'ajuster complètement dans la première base intérieure, ledit premier dispositif de fixation étant configuré de manière à s'ajuster complètement à la première base intérieure; et
- un deuxième dispositif de fixation pour fixer les moyens de rétention pour O₃ à la deuxième base intérieure et permettant aux moyens de rétention pour O₃ de s'ajuster complètement dans la deuxième base intérieure, ledit deuxième dispositif de fixation étant configuré de manière à s'ajuster complètement à la deuxième base intérieure.

2. Dispositif passif inorganique d'échantillonnage (1) selon la revendication 1, dans lequel des filtres métalliques (4) d'une taille de maille de 50 à 100 sont utilisés en tant que moyens de rétention.

3. Dispositif passif inorganique d'échantillonnage (1) selon la revendication 1, dans lequel les échantillonneurs semi-circulaires préparés pour le NO₂-SO₂ et O₃ sont assemblés l'un à l'autre lorsqu'ils sont placés côte à côte sur le substrat (7) produit à partir du même matériau.

4. Dispositif passif inorganique d'échantillonnage (1) selon la revendication 1, dans lequel un couvercle de barrière (3) comprenant un filtre métallique (4) est disposé sur celui-ci pour le recouvrir pendant l'échantillonnage.

5. Dispositif passif inorganique d'échantillonnage (1) selon la revendication 4, mettant en oeuvre un métal d'une taille de maille de 50 à 100 dans son couvercle de barrière (3).

6. Inorganic passive sampler (1) according to Claim 5, wherein ribs (9) provided on the inside of the barrier cover (3) and on the outer surface of the semicircles to ensure that the cover fits completely.

7. Dispositif passif inorganique d'échantillonnage (1) selon la revendication 5, incluant un couvercle supplémentaire fermé (2) fixé sur le couvercle de barrière (3) lors du transport de l'échantillonneur.

8. Dispositif passif inorganique d'échantillonnage (1) selon la revendication 1, où les demi-cercles ont chacun une aire de section de 4,75 cm².

9. Dispositif passif inorganique d'échantillonnage (1) selon la revendication 1, fabriqué en polypropylène et de couleur blanche.
